# EUROPÄISCHE PATENTSCHRIFT

(11) **EP 0 717 197 B1**
(45) Veröffentlichungstag und Bekanntmachung des Hinweises auf die Patenterteilung: **14.08.2002**
(21) Anmeldenummer: 95115127.3
(22) Anmeldetag: 26.09.1995
(51) Int. Cl.: F04F 5/52, F02M 37/02, B60K 15/077

(54) **Saugstrahlpumpe**
Jet pump
Pompe à jet

(30) Priorität: 16.12.1994 DE 4444855
(43) Veröffentlichungstag der Anmeldung: 19.06.1996
(73) Patentinhaber: ROBERT BOSCH GMBH, 70442 Stuttgart (DE)
(72) Erfinder: Strohl, Willi, D-71717 Beilstein (DE); Haeussler, Georg, Dipl.-Ing. (FH), D-71254 Ditzingen (DE); Wahl, Oliver, D-71701 Schwieberdingen (DE)

(56) Entgegenhaltungen:
- DE-A- 3 732 415
- DE-U- 9 101 313
- DE-U- 9 116 296
- US-A- 2 325 931
- US-A- 3 020 950
- US-A- 5 133 324
- PATENT ABSTRACTS OF JAPAN vol. 16, no. 416 (M-1304), 2.September 1992 & JP-A-04 140500 (JIDOSHA DENKI), 14.Mai 1992,
- CRYOGENICS, Bd. 26, Nr. 2, 1.Februar 1986, GUILDFORD GB, Seiten 90-92, XP002013278 ELLIOTT: "Liquid Helium Transfer with a Two-Phase Jet Pump"

## Beschreibung

Die Erfindung betrifft eine Saugstrahlpumpe für verdampfungskritische Flüssigkeiten, insbesondere Kraftstoff, nach der im Oberbegriff des Anspruchs 1 definierten Gattung.

Eine solche Saugstrahlpumpe ist durch die DE-U-91 01 313 bekannt. Diese Saugstrahlpumpe dient zum Fördern von Kraftstoff und weist ein an einer flüssigkeitführenden Druckleitung angeschlossenes Venturirohr auf. Das Venturirohr weist einen Mündungsabschnitt mit gegenüber dem lichten Rohrquerschnitt reduziertem Mündungsquerschnitt auf und diesem ist mit mindestens Spaltabstand axial ein Mischrohr nachgeordnet, dessen lichter Rohrquerschnitt größer ist als der Mündungsquerschnitt des Venturirohrs. Im Venturirohr ist ein Druckregelventil mit Ventilglied, Ventilsitz und Ventilschließfeder integriert, das von dem im Venturirohr herrschenden Flüssigkeitsdruck in Öffnungsrichtung belastet ist und das eine Teilmenge der im Venturirohr strömenden Flüssigkeit radial austreten läßt. Es sind Strömungsleitmittel vorgesehen, die die über das Druckregelventil austretende Flüssigkeit in eine äußere Strömung entlang des dem Mündungsabschnitt nächstliegenden Endbereichs des Venturirohrs zwingen und im axialen Abstand von dem Mündungsabschnitt freigeben. Die Strömungsleitmittel sind dabei als ein ringförmiger Kanal zwischen dem Endbereich des Venturirohrs und dem diesen umgebenden Ventilglied realisiert. Durch diese Ausbildung der Saugstrahlpumpe wird eine Kühlung und Entgasung des durch das Venturirohr strömenden Kraftstoffs erreicht und dadurch eine hohe Förderleistung und ein guter Wirkungsgrad der Saugstrahlpumpe erreicht. Es wird angestrebt, die Förderleistung und den Wirkungsgrad der Saugstrahlpumpe weiter zu verbessern.

### Vorteile der Erfindung

Die erfindungsgemäße Saugstrahlpumpe mit den Merkmalen des Anspruchs 1 oder des Anspruchs 5 hat demgegenüber den Vorteil, daß die Kühlung und Entgasung der die Saugstrahlpumpe durchströmenden Flüssigkeit und damit die Förderleistung und der Wirkungsgrad der Saugstrahlpumpe weiter verbessert ist. Bei der erfindungsgemäßen Saugstrahlpumpe mit den kennzeichnenden Merkmalen des Anspruchs 1 wird durch die Schnecken- oder Gewindegänge die durch das Druckregelventil abgesteuerte Flüssigkeitsmenge über den Umfang des Endabschnitts des Venturirohrs entlang geführt und dabei die Flüssigkeit entspannt und der Endabschnitt des Venturirohrs kräftig gekühlt.

Bei der erfindungsgemäßen Saugstrahlpumpe mit den kennzeichnenden Merkmalen des Anspruchs 5 wird durch den Fliehkraft-Entgaser unter Ausnutzung der auf den Flüssigkeitsstrahl, der aus dem Mündungsquerschnitt des Venturirohrs austritt, wirkenden Zentrifugalkraft der Gasanteil von dem Flüssigkeitsanteil getrennt. so daß der in das Mischrohr einlaufende Flüssigkeitsstrahl einen wesentlich geringeren Gasanteil aufweist. Damit ist der Impulsaustausch zwischen der in das Mischrohr einströmenden Treibflüssigkeitsmenge und der dabei mitgerissenen Saugflüssigkeitsmenge wesentlich verbessert, was den Gesamtwirkungsgrad der Saugstrahlpumpe steigert.

Durch die Kombination von Druckregelventil mit Kühlung des vorderen Venturirohr-Abschnitts und Fliehkraft-Entgaser zwischen dem Venturirohr und dem Mischrohr kann der Wirkungsgrad der Sausstrahlpumpe weiter gesteigert werden.

Durch die in den weiteren Ansprüchen aufgeführten Maßnahmen sind vorteilhafte Weiterbildungen und Verbesserungen der im Anspruch 1 bzw. im Anspruch 5 angegebenen Saugstrahlpumpe möglich.

### Zeichnung

Die Erfindung ist anhand von in der Zeichnung dargestellten Ausführungsbeispielen in der nachfolgenden Beschreibung näher erläutert. Es zeigen jeweils in schematischer Darstellung:
- Fig. 1: einen Längsschnitt eines Kraftstofftanks für eine Brennkraftmaschine mit darin angeordneter Saugstrahlpumpe,
- Fig. 2: ausschnittweise einen Längsschnitt der Saugstrahlpumpe in Fig. 1, vergrößert dargestellt,
- Fig. 3: eine gleiche Darstellung wie in Fig. 2 einer Saugstrahlpumpe gemäß einem zweiten Ausführungsbeispiel,
- Fig. 4: eine perspektivische Darstellung einer Saugstrahlpumpe gemäß einem dritten Ausführungsbeispiel.

### Beschreibung der Ausführungsbeispiele

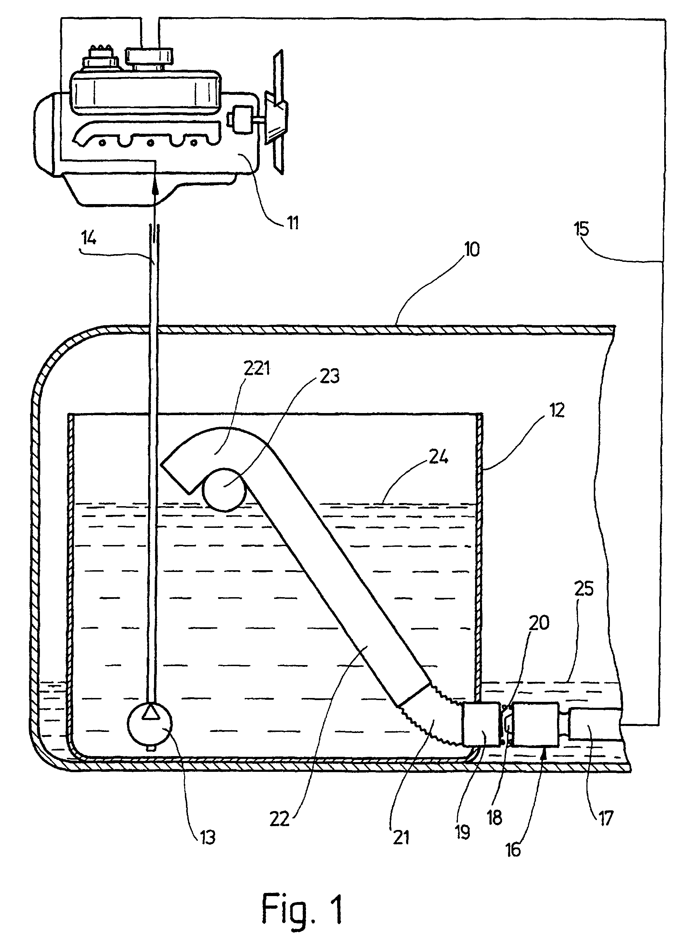

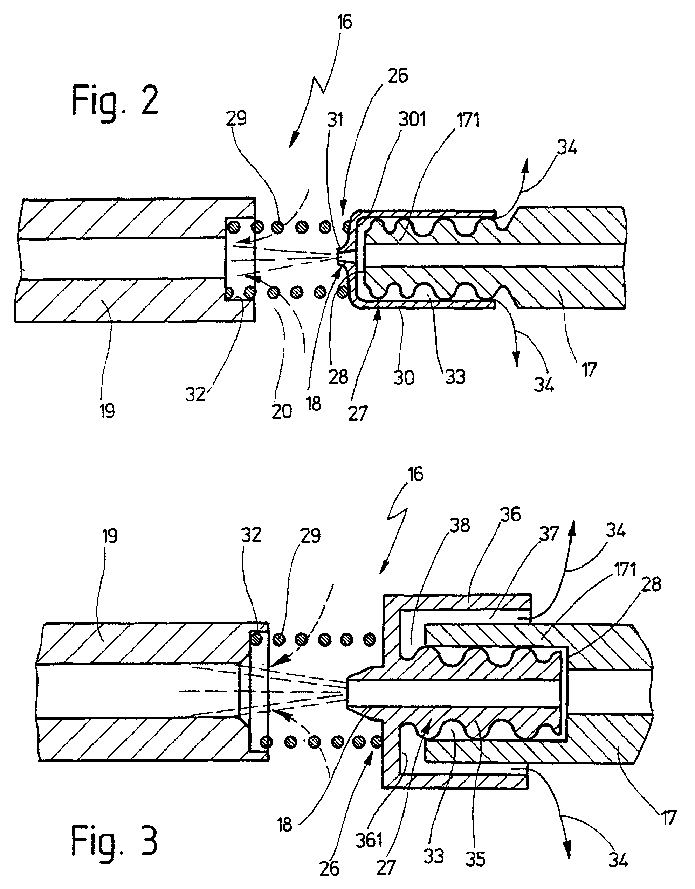

In Fig. 1 ist ein Kraftstofftank 10 im Längsschnitt dargestellt, aus dem eine Brennkraftmaschine 11 mit Kraftstoff versorgt wird. Am Boden des Kraftstofftanks 10 ist ein Dralltopf 12 befestigt, in dem eine Elektrokraftstoffpumpe 13 angeordnet ist, die über eine Förderleitung 14 Kraftstoff zu einer nicht dargestellten Kraftstoffeinspritzanlage der Brennkraftmaschine 11 fördert. Der von der Brennkraftmaschine 11 nicht verbrauchte Kraftstoff fließt über eine Rückführleitung 15 in den Kraftstofftank 10 zurück, die an einer im Kraftstofftank 10 in Bodennähe angeordneten Saugstrahlpumpe 16 angeschlossen ist. Die Saugstrahlpumpe 16 besteht aus einem Venturirohr 17, das in bekannter Weise einen Mündungsabschnitt 18 mit einem gegenüber dem lichten Rohrquerschnitt reduzierten Mündungsquerschnitt aufweist (Fig. 2), und aus einem diesem mit Abstand axial nachgeordneten Mischrohr 19, dessen lichter Rohrquerschnitt größer ist als der Mündungsquerschnitt des Venturirohrs 17. Der Abstand zwischen Mischrohr 19 und Venturirohr 17 ist mindestens so groß gewählt, daß ein Ringspalt 20 verbleibt, durch den hindurch Kraftstoff aus dem Kraftstofftank 10 in das Mischrohr 19 eindringen kann. Das Mischrohr 19 durchstößt die Topfwand des Dralltopfes 12 und endet somit einerseits im Kraftstofftank 10 und andererseits im Dralltopf 12. Im Dralltopf 12 ist das Mischrohr 19 über eine Manschette 21 an einem Ausflußrohr 22 angeschlossen. das mit einem bogenförmigen Rohrabschnitt 221 auf einen Schwimmer 23 aufliegt, wodurch die Mündung des Rohrabschnitts 221 immer oberhalb des Kraftstoffspiegels 24 im Dralltopf 12 liegt.

Im Betrieb fördert die Elektrokraftstoffpumpe 13 Kraftstoff über die Förderleitung 14 zur Brennkraftmaschine 11. Da dabei der Brennkraftmaschine 11 in aller Regel eine größere Kraftstoffmenge zugeführt, wird als diese verbraucht, strömt ein Teil der Fördermenge über die Rückführleitung 15 zu der im Kraftstofftank 10 angeordneten Saugstrahlpumpe 16 zurück. Der in der Rückführleitung 15 unter Druck stehende Kraftstoff strömt aus dem Mündungsquerschnitt des Venturirohrs 17 in das Mischrohr 19 und reißt dabei dem Wesen der Saugstrahlpumpe entsprechend über den Ringspalt 20 Kraftstoff mit. Der Kraftstoff fließt über das Ausflußrohr 22 in den Dralltopf 12 ab, so daß der Dralltopf 12 zusätzlich zu dem über die Rückführleitung 15 zurückfließenden Kraftstoff mit weiterem Kraftstoff aus dem Kraftstofftank 10 gefüllt wird. Da der Dralltopf 12 rundum geschlossen ist, liegt der Kraftstoffspiegel 24 im Dralltopf 12 stets oberhalb des Kraftstoffspiegels 25 im Kraftstofftank 10, auch dann, wenn im Kraftstofftank 10 nur noch eine geringe Kraftstoffmenge vorhanden ist.

Die Saugstrahlpumpe 16 ist in Fig. 2 ausschnittweise im Längsschnitt vergrößert dargestellt. Im Venturirohr 17 ist ein Druckregelventil 26 mit Ventilglied 27, Ventilsitz 28 und Ventilschließfeder 29 integriert, das von dem im Venturirohr 17 herrschenden Kraftstoffdruck in Öffnungsrichtung belastet ist. Der Mündungsabschnitt 18 des Venturirohrs 17 ist in das Ventilglied 27 des Druckregelventils 26 verlegt, wozu das Ventilglied 27 als becherförmige Schiebehülse 30 ausgebildet ist, die den Mündungsabschnitt 18 des Venturirohrs 17 als an ihrem Becherboden 301 koaxial angeformten Konuszapfen 31 trägt. Die Schiebehülse 30 übergreift stirnseitig den dem Mündungsabschnitt 18 nächstliegenden Endabschnitt 171 des Venturirohrs 17 und sitzt axial verschieblich auf diesen Endabschnitt 171. Der Ventilsitz 28 des Druckregelventils 26 ist an dem freien Stirnende des Endabschnitts 171 des Venturirohrs 17 ausgebildet und umschließt den lichten Rohrquerschnitt des Venturirohrs 17. Die Ventilschließfeder 29, die hier als Schraubendruckfeder ausgebildet ist, legt den Becherboden 301 der Schiebehülse 30 an den Ventilsitz 28 an, wozu sie sich einerseits an der Außenseite des Becherbodens 301 und andererseits am ringförmigen Grund einer stirnseitigen Ausnehmung 32 im Mischrohr 19 abstützt. Die Ausnehmung 32 dient gleichzeitig der Führung der Schraubdruckfeder 29. Die Achsen von Venturirohr 17, Mündungsabschnitt 18, Schraubendruckfeder 29 und Mischrohr 19 fluchten.

Der Außenmantel des Endabschnitts 171 des Venturirohrs 17, auf dem die becherförmige Schiebehülse 30 axial verschieblich geführt ist, weist mindestens einen Schnecken- oder Gewindegang 33 auf. Bei geöffnetem Druckregelventil 26 kann damit ein Teil des im Venturirohr 17 unter Druck fließenden Kraftstoffs, der über den Mündungsabschnitt 18 strahlartig aus- und in das Mischrohr 19 eintritt, radial am Becherboden 301 austreten, am Becherboden 301 entlangströmen und in dem Gewindegang 33 über den Außenmantel des Endabschnitts 171 zurückströmen. wo er am Ende des Gewindegangs 33 in den Kraftstofftank 10 abfließt. Diese Kraftstoffströmung ist in Fig. 2 durch die Pfeile 34 gekennzeichnet. Diese am geöffneten Druckregelventil 26 ausströmende Kraftstoffmenge entspannt sich, gast dabei aus und kühlt sich dadurch ab. Durch die Kältewirkung des über den Gewindegang 33 entlang des Endabschnittes 171 strömenden Kraftstoffs wird der Endabschnitt 171 stark gekühlt, wodurch wiederum der im Innern des Endabschnitts 171 zum Mündungsabschnitt 18 strömende Kraftstoff gekühlt wird. Infolge der Kühlung wird die Dampfblasenbildung im Kraftstoff erheblich reduziert. Dies hat einen besseren Wirkungsgrad der Saugstrahlpumpe zur Folge, d.h. daß bei gleicher aus dem Venturirohr 17 in das Mischrohr 19 einströmender Kraftstoffmenge ein größerer Anteil an Kraftstoff über den Ringspalt 20 in das Mischrohr 19 angesaugt wird. Die Förderleistung der Saugstrahlpumpe steigt.

Bei der in Fig. 3 ausschnittweise im Längsschnitt schematisch dargestellten modifizierten Saugstrahlpumpe 16 ist die Kühlwirkung des aus dem Druckregelventil 26 austretenden Kraftstoffs noch verbessert, so daß die Förderleistung dieser Saugstrahlpumpe größer ist. Auch hier ist der Mündungsabschnitt 18 des Venturirohrs 17 in das Ventilglied 27 des in der Saugstoffpumpe 16 integrierten Druckregelventils 27 verlegt. Das Ventilglied 27 ist hier als Rohrstück 35 mit gegenüber dem lichten Querschnitt des Venturirohrs 17 reduziertem lichten Querschnitt ausgebildet, das an seinem, dem Mischrohr 19 zugekehrten freien Ende den Mündungsabschnitt 18 trägt und auf seinem Außenumfang mit mindestens einem Schnecken- oder Gewindegang 33 versehen ist. Das zum Venturirohr 17 koaxiale Rohrstück 35 ist in dem vorderen Endabschnitt 171 des Venturirohrs 17 axial verschieblich geführt, wozu der Innendurchmesser dieses Endabschnitts 171 größer ausgebildet ist als der Innendurchmesser des Venturirohrs 17. An der sich dadurch am Übergang zum Endabschnitt 171 bildenden Ringschulter ist der Ventilsitz 28 des Druckregelventils 26 ausgebildet. Auf diesen Ventilsitz 28 wird das Rohrstück 35 durch die Ventilschließfeder 29 mit seiner ringförmigen Stirnseite angedrückt. Die wiederum als Schraubendruckfeder ausgebildete Ventilschließfeder 29 stützt sich dabei am Rohrstück 35 und in der Ausnehmung 32 des Mischrohrs 19 ab. Am Rohrstück 35 ist noch einstückig eine Kappe 36 ausgebildet, die den Endabschnitt 171 des Venturirohrs 17 unter Belassung eines radialen Ringspalts 37 teilweise übergreift. Zwischen dem Kappenboden 361 und der Stirnseite des Endabschnitts 171 ist ein Axialspalt 38 vorgesehen, der auch bei geschlossenem Druckregelventil 26 erhalten bleibt.

Bei geöffnetem Druckregelventil 26 tritt wiederum eine Teilmenge des durch das Venturirohr 17 strömenden Kraftstoffs radial zwischen Rohrstück 35 und Ventilsitz 28 aus, durchströmt den Gewindegang 33 und wird am Kappenboden 361 der Kappe 36 umgelenkt, um über den Endabschnitt 171 zur Kappenöffnung zurückzuströmen, wo der Kraftstoff in den Kraftstofftank 10 abfließt. In gleicher Weise wie bei der Saugstrahlpumpe in Fig. 2 entspannt sich der über das Druckregelventil 26 austretende Kraftstoff, entgast und kühlt sich dabei ab, wobei die Kältewirkung zu einer Kühlung des im Rohrstück 35 strömenden Kraftstoffs führt und dort die Gasblasenbildung wesentlich reduziert.

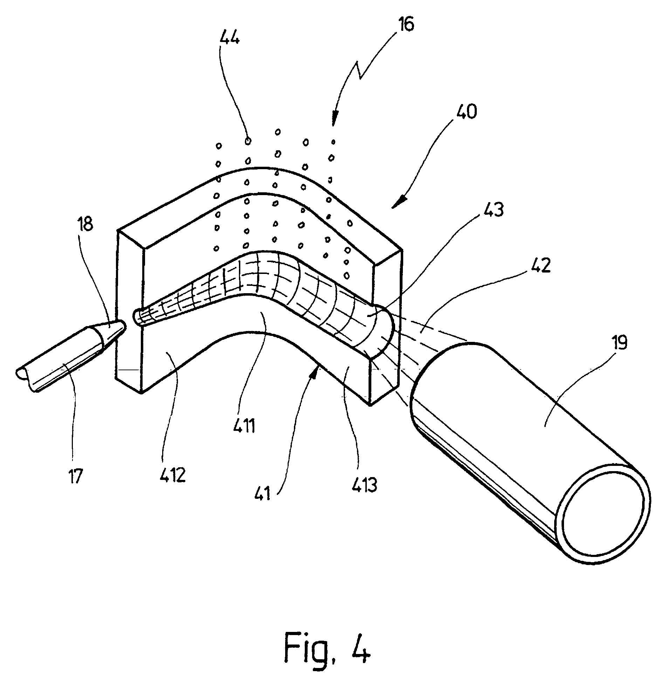

Bei der in Fig. 4 schematisch in perspektivischer Ansicht dargestellten Saugstrahlpumpe 16 gemäß einem weiteren Ausführungsbeispiel wird die Förderleistung der Saugstrahlpumpe und damit deren Wirkungsgrad dadurch verbessert, daß das aus dem Mündungsquerschnitt des Venturirohrs 17 in Richtung zum Mischrohr 19 hin ausströmende Kraftstoff-Gasgemisch mittels eines Fliehkraft-Entgasers 40 getrennt wird, wobei der Dampfoder Gasanteil entweicht und weitgehend gasblasenfreier oder gasblasenreduzierter Kraftstoff in das Mischrohr 19 eintritt. Dadurch wird der Impulsaustausch zwischen der Kraftstofftreibmenge und der aus dem Kraftstofftank mitgerissenen, in das Mischrohr 19 angesaugten Kraftstoffsaugmenge verbessert, wodurch die Förderleistung der Saugstrahlpumpe, d.h. der Anteil der aus dem Kraftstofftank 10 angesaugten Kraftstoffmenge, wesentlich steigt.

Der Fliehkraft-Entgaser 40 weist einen Krümmer 41 auf, an dem der aus dem Mündungsquerschnitt des Venturirohrs austretende Flüssigkeitsstrahl (in Fig. 4 strichliniert mit 42 angedeutet) längs eines Kreisbogenabschnitts zur Einlaßöffnung des Mischrohrs 19 geführt wird. Der Kreisbogenabschnitt des Krümmers 41 erstreckt sich dabei über ein Umfangswinkel von mindestens 90°. Der Krümmer 41 enthält eine bogenförmige Wandfläche 411, die sich zu beiden Seiten hin jeweils in eine ebene Wandfläche 411 und 413 fortsetzt. Die ebene Wandfläche 412 ist so ausgerichtet, daß sie mit der Achse des Venturirohrs 17 fluchtet, während die ebene Wandfläche 413 mit der Achse des Mischrohrs 19 fluchtet. In den Wandflächen 411 - 413 ist eine Leitnut 43 mit kreisabschnittförmigem Querschnitt eingebracht, die sich über den gesamten Krümmer 41 hinweg, von der dem Mündungsabschnitt 18 des Venturirohrs zugekehrten Krümmerseite bis zu der dem Mischrohr 19 zugekehrten Krümmerseite erstreckt. Entsprechend der Strahlaufweitung des das Venturirohr 17 verlassenden Kraftstoffstrahls 42 nimmt die Leitnut 43 in Nutbreite und Nuttiefe, ausgehend von der dem Venturirohr 17 zugekehrten Krümmerseite bis hin zu der dem Mischrohr 19 zugekehrten Krümmerseite kontinuierlich zu. Die Eintrittsachse der Leitnut 43 an der dem Venturirohr 17 zugekehrten Krümmerseite fluchtet mit der Achse des Venturirohrs 17 und die Austrittsachse der Leitnut 43 an der dem Mischrohr 19 zugekehrten Krümmerseite fluchtet mit der Achse des Mischrohrs 19.

Bei Betrieb wird der aus dem Venturirohr 17 unter Druck ausströmende Kraftstoffstrahl 42 längs der Leitnut 43 im Krümmer 41 bogenförmig umgelenkt, wobei die Zentrifugalkraft den Flüssigkeitsanteil im Kraftstoffstrahl 42 in den Grund der Leitnut 43 hineindrückt, von wo er aus direkt in das Mischrohr 19 gelangt, während der Gasanteil im Kraftstoffstrahl 42, der in seiner Bahn von der Zentrifugalkraft weniger beeinflußt wird, am Krümmer 41 vorbei nach oben steigt und sich im Kraftstofftank 10 niederschlägt. Der abströmende Gasblasenanteil ist in Fig. 4 symbolisch dargestellt und mit 44 gekennzeichnet. Die in das Mischrohr einströmende weitgehende gasblasenfreie bzw. glasblasenreduzierte Kraftstofftreibmenge hat eine verbesserte Förderleistung der Saugstrahlpumpe zur Folge.

Um die Förderleistung der Saugstrahlpumpe weiter zu steigern, ist es möglich, den Fliehkraft-Entgaser 41 der Saugstrahlpumpe in Fig. 4 in die Saugstrahlpumpe 16 in Fig. 2 oder 3 zu integrieren, indem er dort zwischen dem Mündungsabschnitt 18 des Venturirohrs 17 und dem Mischrohr 19 angeordnet wird.

Die Erfindung ist nicht auf die beschriebenen Ausführungsbeispiele der Saugstrahlpumpe 16 zur Befüllung eines Dralltopfes 12 im Kraftstofftank 10 einer Brennkraftmaschine 11 beschränkt. Die Saugstrahlpumpe kann mit gleichen Vorteilen auch beispielsweise in sog. Satteltanks eingesetzt werden, in welcher der Kraftstofftank durch einen Sattel in zwei miteinander in Verbindung stehenden Kammern unterteilt ist. Die Elektrokraftstoffpumpe 13 ist in der einen Tankkammer angeordnet, und die Rücklaufleitung 15 mündet in der anderen Tankkammer und ist an die dort angeordnete Saugstrahlpumpe angeschlossen. Das Mischrohr 19 durchstößt die Sattelwand und stellt eine Verbindung zwischen den Kammern her.

Die beschriebene Saugstrahlpumpe ist weiterhin nicht nur zum Fördern von Kraftstoff geeignet, sondern kann auch mit Vorteil für alle Flüssigkeiten eingesetzt werden, die verdampfungskritisch sind und bei denen sich bei Erwärmung durch Ausgasen Gasblasen in der Flüssigkeit bilden.

## Patentansprüche

1. Saugstrahlpumpe für verdampfungskritische Flüssigkeiten, insbesondere Kraftstoff, mit einem an einer flüssigkeitführenden Druckleitung (15) angeschlossenen Venturirohr (17), das einen Mündungsabschnitt (18) mit gegenüber dem lichten Rohrquerschnitt reduziertem Mündungsquerschnitt aufweist, mit einem diesem mit mindestens Spaltabstand (20) axial nachgeordneten Mischrohr (19), dessen lichter Rohrquerschnitt größer ist als der Mündungsquerschnitt des Venturirohrs (17), wobei im Venturirohr (17) ein Druckregelventil (26) mit Ventilglied (27), Ventilsitz (28) und Ventilschließfeder (29) integriert ist, das von dem im Venturirohr (17) herrschenden Flüssigkeitsdruck in Öffnungsrichtung belastet ist und eine Teilmenge der im Venturirohr (17) strömenden Flüssigkeit radial austreten läßt, und wobei Strömungsleitmittel vorgesehen sind, die die über das Druckregelventil (26) austretende Flüssigkeit in eine äußere Strömung entlang des dem Mündungsabschnitt (18) nächstliegenden Endbereichs des Venturirohrs (17) zwingen und im axialen Abstand von dem Mündungsabschnitt (18) freigeben, **dadurch gekennzeichnet, daß** die Strömungsmittel teilweise durch zwischen dem dem Mündungsabschnitt (18) des Venturirohrs (17) nächstliegenden Endabschnitt (171) des Venturirohrs (17) und dem Ventilglied (27) vorgesehene Schnecken- oder Gewindegänge (33) realisiert sind.

2. Saugstrahlpumpe nach Anspruch 1, **dadurch gekennzeichnet, daß** der Mündungsabschnitt (18) des Venturirohrs (17) in das Ventilglied (27) des Druckregelventils (26) verlegt ist, das als becherförmige Schiebehülse (30) den dem Mündungsabschnitt (18) nächstliegenden Endabschnitt (171) des Venturirohrs (17) stirnseitig übergreift, auf diesem axial verschieblich sitzt und den Mündungsabschnitt (18) als an ihrem Becherboden (301) koaxial angeformten Konuszapfen (31) trägt, daß der Ventilsitz (28) des Druckregelventils (26) an dem freien Stirnende des Venturirohrs (17), dessen lichten Rohrquerschnitt umschließend ausgebildet ist, daß die Ventilschließfeder (29) an der Schiebehülse (30) angreift und deren Becherboden (301) auf den Ventilsitz (28) aufdrückt und daß die Strömungsleitmittel einerseits durch die Schiebehülse (30) und andererseits durch die im Außenmantel des von der Schiebehülse (30) übergriffenen Endabschnitts (171) des Venturirohrs (17) ausgebildeten Schnecken- oder Gewindegänge (33) realisiert sind.

3. Saugstrahlpumpe nach Anspruch 1, **dadurch gekennzeichnet, daß** der Mündungsabschnitt (18) des Venturirohrs (17) in das Ventilglied (27) des Druckregelventils (26) verlegt ist, das als Rohrstück (35) mit gegenüber dem lichten Querschnitt des Venturirohrs (17) reduziertem lichtem Querschnitt ausgebildet und in dem am freien Stirnende sich anschließenden Endabschnitt (171) des Venturirohrs (17) axial verschieblich geführt ist, daß der lichte Querschnitt des das Rohrstück (35) aufnehmenden Endabschnitts (171) des Venturirohrs (17) größer ist als der lichte Querschnitt des Venturirohrs (17), daß an der am Übergang zu diesem Endabschnitt (171) sich ergebenden Ringschulter der Ventilsitz (28) des Druckregelventils (26) ausgebildet ist, gegen den die am Rohrstück (35) angreifende Ventilschließfeder (29) das Rohrstück (35) mit dessen ringförmiger Stirnseite andrückt, und daß die Strömungsleitmittel einerseits durch die im Außenmantel des Rohrstücks (35) ausgebildeten Schnecken- oder Gewindegänge (33) und andererseits durch eine am Rohrstück (35) befestigte Kappe (36) realisiert sind, die den Endabschnitt (171) des Venturirohrs (17) unter Belassung eines radialen Ringspalts (37) zumindest teilweise übergreift.

4. Saugstrahlpumpe nach Anspruch 2 oder 3, **dadurch gekennzeichnet, daß** die Ventilschließfeder (29) als Schraubendruckfeder ausgebildet ist, deren Widerlager (32) an dem Mischrohr (19) ausgebildet ist.

5. Saugstrahlpumpe nach dem Oberbegriff des Anspruchs 1 oder nach einem der Ansprüche 1 - 4, **gekennzeichnet durch** einen zwischen Venturirohr (17) und Mischrohr (19) angeordneten Fliehkraft-Entgaser (40), der in dem aus dem Mündungsquerschnitt des Venturirohrs (17) austretenden Flüssigkeits-Gasgemisch **durch** Ausnutzen der Zentrifugalkraft den Gasanteil vom Flüssigkeitsanteil trennt.

6. Saugstrahlpumpe nach Anspruch 5, **dadurch gekennzeichnet, daß** der Fliehkraft-Entgaser (40) einen Krümmer (41) aufweist, der den aus dem Mündungsquerschnitt des Venturirohrs (17) austretenden Flüssigkeitsstrahl (42) längs eines Kreisbogenabschnitts zur Einlaßöffnung des Mischrohrs (19) zwingt.

7. Saugstrahlpumpe nach Anspruch 6, **dadurch gekennzeichnet, daß** der Kreisbogenabschnitt des Krümmers (41) einen Umfangswinkel von mindestens 90° aufweist.

8. Saugstrahlpumpe nach Anspruch 6 oder 7, **dadurch gekennzeichnet, daß** der Krümmer (41) eine bogenförmige Wandfläche (411) aufweist, die sich zu beiden Seiten hin jeweils in eine ebene Wandfläche (412,413) fortsetzt, die mit der Achse des Venturirohrs (17) bzw. der Achse des Mischrohrs (19) fluchtet.

9. Saugstrahlpumpe nach Anspruch 8, **dadurch gekennzeichnet, daß** in den Wandflächen (411-413) des Krümmers (41) eine Leitnut (43) mit kreisabschnittförmigem Querschnitt eingebracht ist, die sich von der dem Mündungsabschnitt (18) des Venturirohrs (17) zugekehrten Krümmerseite bis zu der dem Mischrohr (19) zugekehrten Krümmerseite mit entsprechend der Aufweitung des aus dem Mündungsquerschnitt des Venturirohrs (17) austretenden Kraftstoffstrahls (42) entsprechender kontinuierlichen Zunahme von Nuttiefe und Nutbreite erstreckt, und daß die Nuteintrittsachse mit der Achse des Venturirohrs (17) und die Nutaustrittsachse mit der Achse des Mischrohrs (19) fluchtet.

10. Saugstrahlpumpe nach einem der Ansprüche 1 - 9, **gekennzeichnet durch** ihre Verwendung zur Befüllung einer in einem Kraftstofftank (10) einer Brennkraftmaschine (11) separierten Kraftstoffkammer (12) mit Kraftstoff aus dem Kraftstofftank (10), indem das Venturirohr (17) mit Druckregelventil (26) bzw. das Venturirohr (17) und der Fliehkraft-Entgaser (40) im Kraftstofftank (10) angeordnet sind, das Mischrohr (19) **durch** die Kammerwand hindurchgeführt ist und das Venturirohr (17) an einer von der Brennkraftmaschine (11) zum Kraftstofftank (10) führenden Kraftstoffrückführleitung (15) angeschlossen ist.

## Claims

1. Suction jet pump for evaporation-critical liquids, in particular fuel, with a Venturi tube (17) which is connected to a liquid-carrying delivery line (15) and which has a mouth portion (18) with a mouth cross section reduced in relation to the clear tube cross section, and with a mixing tube (19) which follows said mouth portion axially with at least a gap clearance (20) and the clear tube cross section of which is larger than the mouth cross section of the Venturi tube (17), a pressure-regulating valve (26) with valve member (27), valve seat (28) and valve-closing spring (29) being integrated in the Venturi tube (17), which pressure-regulating valve is loaded in the opening direction by the liquid pressure prevailing in the Venturi tube (17) and allows a part-quantity of the liquid flowing in the Venturi tube (17) to emerge radially, and flow guide means being provided, which force the liquid emerging via the pressure-regulating valve (26) into an outer flow along that end region of the Venturi tube (17) which is located nearest to the mouth portion (18) and release said liquid at an axial distance from the mouth portion (18), **characterized in that** the flow means are formed partially by worm or thread flights (33) provided between that end portion (171) of the Venturi tube (17) which is located nearest to the mouth portion (18) of the Venturi tube (17) and the valve member (27).

2. Suction jet pump according to Claim 1, **characterized in that** the mouth portion (18) of the Venturi tube (17) is shifted into the valve member (27) of the pressure-regulating valve (26), which valve member engages on the end face, as a bowl-shaped sliding sleeve (30), over that end portion (171) of the Venturi tube (17) which is located nearest to the mouth portion (18), is seated axially displaceably on said end portion and carries the mouth portion (18) as a conical spigot (31) integrally formed coaxially on its bowl bottom (301), **in that** the valve seat (28) of the pressure-regulating valve (26) is formed on the free end face of the Venturi tube (17), so as to surround the clear tube cross section of the latter, **in that** the valve-closing spring (29) engages on the sliding sleeve (30) and presses the bowl bottom (301) of the latter onto the valve seat (28), and **in that** the flow guide means are formed, on the one hand, by the sliding sleeve (30) and, on the other hand, by the worm or thread flights (33) produced in the outer casing of that end portion (171) of the Venturi tube (17) over which the sliding sleeve (30) engages.

3. Suction jet pump according to Claim 1, **characterized in that** the mouth portion (18) of the Venturi tube (17) is shifted into the valve member (27) of the pressure-regulating valve (26), which valve member is designed as a tubular piece (35) with a clear cross section reduced in relation to the clear cross section of the Venturi tube (17) and is guided axially displaceably **in that** end portion (171) of the Venturi tube (17) which adjoins the free end face, **in that** the clear cross section of that end portion (171) of the Venturi tube (17) which receives the tubular piece (35) is larger than the clear cross section of the Venturi tube (17), **in that** the valve seat (28) of the pressure-regulating valve (26) is formed at the annular shoulder occurring at the transition to this end portion (171), against which valve seat the valve-closing spring (29) engaging on the tubular piece (35) presses the tubular piece (35) with the annular end face of the latter, and **in that** the flow guide means are formed, on the one hand, by the worm or thread flights (33) produced in the outer casing of the tubular piece (35) and, on the other hand, by a cap (36) which is fastened to the tubular piece (35) and which engages at least partially over the end portion (171) of the Venturi tube (17) so as to leave a radial annular gap (37).

4. Suction jet pump according to Claim 2 or 3, **characterized in that** the valve-closing spring (29) is designed as a helical compression spring, the abutment (32) of which is formed on the mixing tube (19).

5. Suction jet pump according to the precharacterizing clause of Claim 1 or according to one of Claims 1 - 4, **characterized by** a centrifugal degasser (40) which is arranged between the Venturi tube (17) and the mixing tube (19) and which, by utilizing the centrifugal force, separates the gas fraction from the liquid fraction in the liquid/gas mixture emerging from the mouth cross section of the Venturi tube (17).

6. Suction jet pump according to Claim 5, **characterized in that** the centrifugal degasser (40) has a bend (41) which forces the liquid jet (42) emerging from the mouth cross section of the Venturi tube (17) along a segment of an arc of a circle to the inlet orifice of the mixing tube (19).

7. Suction jet pump according to Claim 6, **characterized in that** the segment of an arc of circle of the bend (41) has a circumferential angle of at least 90°.

8. Suction jet pump according to Claim 6 or 7, **characterized in that** the bend (41) has an arcuate wall face (411) which is continued on each of the two sides into a plane wall face (412, 413) which is in alignment with the axis of the Venturi tube (17) or with the axis of the mixing tube (19).

9. Suction jet pump according to Claim 8, **characterized in that** a guide groove (43) with a cross section in the form of a segment of a circle is introduced in the wall faces (411 - 413) of the bend (41) and extends from the bend side facing the mouth portion (18) of the Venturi tube (17) as far as the bend side facing the mixing tube (19), with a continuous increase in groove depth and groove width which corresponds to the widening of the fuel jet (42) emerging from the mouth cross section of the Venturi tube (17), and **in that** the groove entry axis is in alignment with the axis of the Venturi tube (17) and the groove exit axis is in alignment with the axis of the mixing tube (19).

10. Suction jet pump according to one of Claims 1 - 9, **characterized by** its use for filling a fuel chamber (12), separated in a fuel tank (10) of an internal combustion engine (11), with fuel from the fuel tank (10), in that the Venturi tube (17) together with the pressure-regulating valve (26) or the Venturi tube (17) and the centrifugal degasser (40) are arranged in the fuel tank (10), the mixing tube (19) is lead through the chamber wall, and the Venturi tube (17) is connected to a fuel return line (15) leading from the internal combustion engine (11) to the fuel tank (10).

## Revendications

1. Pompe à jet pour des liquides critiques du point de vue de la vaporisation, notamment du carburant, comportant un tube venturi (17) relié à une conduite de pression (15) conduisant le liquide, ce tube venturi ayant un segment d'embouchure (18) de section réduite par rapport à la section libre du tube, avec un tube mélangeur (19) installé axialement en aval du venturi, en laissant un intervalle minimum (20), la section libre du tube mélangeur étant supérieure à la section de l'embouchure du tube venturi (17), avec une soupape de régulation de pression (26) comprenant un organe de soupape (27), un siège de soupape (28) et un ressort de fermeture de soupape (29), intégrée dans le tube venturi (17), et sollicitée dans le sens de l'ouverture par la pression du liquide régnant dans le tube venturi (17) en permettant à une quantité partielle de liquide passant dans le tube venturi (17) de s'échapper radialement, et comportant des moyens de guidage de l'écoulement pour obliger le liquide sortant de la soupape de régulation de pression (26) de passer par un écoulement extérieur le long de la zone d'extrémité du tube venturi (17), la plus proche du segment d'embouchure (18) et de se libérer à distance axiale du segment d'embouchure (18),
**caractérisée en ce que**
les moyens d'écoulement sont réalisés en partie par le segment d'extrémité (171) du tube venturi (17) le plus proche du segment d'embouchure (18) du tube venturi (17) et par des filets hélicoïdaux (33) prévus sur l'organe formant soupape (27).

2. Pompe à jet selon la revendication 1,
**caractérisée en ce que**
le segment d'embouchure (18) du tube venturi (17) est décalé dans l'organe de soupape (27) du régulateur de pression (26) pour recouvrir comme un manchon coulissant (30) en forme de gobelet frontalement le segment d'extrémité (171) du tube venturi (17) le plus proche du segment d'embouchure (18), en coulissant axialement sur celui-ci et en portant le segment d'embouchure (18) comme cône (31) coaxial formé sur son fond de gobelet (301),
le siège de soupape (28) de la soupape de régulation de pression (26) à l'extrémité frontale libre du tube venturi (17), est réalisé de façon à entourer la section libre du tube,
le ressort obturateur (29) de la soupape agit sur le manchon coulissant (30) et presse son fond de gobelet (301) contre le siège de soupape (28), et
les moyens de guidage de l'écoulement sont réalisés d'une part par le manchon coulissant (30) et d'autre part par les filetages hélicoïdaux (33) formés sur l'enveloppe du segment d'extrémité (171) du tube venturi (17) qui est chevauché par le manchon coulissant (30).

3. Pompe à jet selon la revendication 1,
**caractérisée en ce que**
le segment d'embouchure (18) du tube venturi (17) est décalé dans l'organe de soupape (27) de la soupape de régulation de pression (26), ce segment étant réalisé comme embout tubulaire (35) avec une section libre réduite par rapport à la section libre du tube venturi (17) et est guidé de manière coulissante axialement dans le segment d'extrémité (171) du tube venturi (17) adjacent à l'extrémité frontale libre,
la section libre du segment d'extrémité (171) du tube venturi (17) qui reçoit l'embout tubulaire (35) est plus grande que la section libre du tube venturi (17),
au niveau de l'épaulement annulaire formé au passage avec le segment d'extrémité (171) on a le siège de soupape (28) de la soupape de régulation de pression (26) et le ressort d'obturation de soupape (29) agit contre l'embout tubulaire (35), en poussant celui-ci (35) par sa face frontale annulaire, et
les moyens de guidage du fluide sont réalisés d'une part par les filetages hélicoïdaux (33) de l'enveloppe extérieure de l'embout tubulaire (35) et d'autre part par un capuchon (36) fixé à l'embout tubulaire (35) et qui chevauche au moins en partie le segment d'extrémité (171) du tube venturi (17) en laissant un intervalle annulaire radial (37).

4. Pompe à jet selon la revendication 2 ou 3,
**caractérisée en ce que**
le ressort d'obturation de soupape (29) est un ressort hélicoïdal de compression dont l'appui (32) est réalisé sur le tube mélangeur (19).

5. Pompe à jet selon le préambule de la revendication 1 ou l'une des revendications 1 à 4,
**caractérisée par**
un dégazeur centrifuge (40) placé entre le tube venturi (17) et le tube mélangeur (19), ce dégazeur séparant grâce à la force centrifuge la composante gazeuse de la composante liquide du mélange liquide-gaz sortant du segment d'embouchure du tube venturi (17).

6. Pompe à jet selon la revendication 5,
**caractérisée en ce que**
le dégazeur centrifuge (40) comporte un coude (41) qui oblige le jet de liquide (42) sortant de la section d'embouchure du tube venturi (17), le long d'un segment en arc de cercle vers l'orifice d'entrée du tube mélangeur (19).

7. Pompe à jet selon la revendication 6,
**caractérisée en ce que**
le segment d'arc de cercle du coude (41) correspond à un angle d'arc d'au moins 90°.

8. Pompe à jet selon les revendications 6 ou 7,
**caractérisée en ce que**
le coude (41) comporte une surface de paroi (411) en forme d'arc de cercle qui se poursuit des deux côtés chaque fois par une surface de paroi plane (412, 413) alignée respectivement avec l'axe du tube venturi (17) et avec l'axe du tube mélangeur (19).

9. Pompe à jet selon la revendication 8,
**caractérisée en ce qu'**
une rainure de guidage (43) à section semi-circulaire est réalisée dans les surfaces de paroi (411-413) du coude (41), cette rainure a une profondeur et une largeur augmentant de manière continue entre le côté du coude tourné vers le segment d'embouchure (18) du tube venturi (17) jusqu'au côté du coude tourné vers le tube mélangeur (18), en correspondance avec l'augmentation de la section du jet de carburant (42) à partir du segment d'embouchure du tube venturi (17), et
l'axe d'entrée de la rainure coïncide avec l'axe du tube venturi (17) et l'axe de sortie de la rainure coïncide avec l'axe du tube mélangeur (19).

10. Pompe à jet selon l'une des revendications 1 à 9,
**caractérisée par**
son application au remplissage d'un réservoir de carburant (12) séparé du réservoir de carburant (10) d'un moteur à combustion interne (11) avec du carburant provenant du réservoir (10), en ce que le tube venturi (17) avec la soupape de régulation de pression (26) ou le tube venturi (17) et le dégazeur centrifuge (40) sont installés dans le réservoir de carburant (10), le tube mélangeur (19) traverse la paroi du réservoir et est relié à une conduite de retour de carburant (15) reliant le moteur à combustion interne (11) au réservoir de carburant (10).
